(19) **Europäisches Patentamt**
**European Patent Office**
**Office européen des brevets**

(11) **EP 2 197 952 B1**

(12) **EUROPÄISCHE PATENTSCHRIFT**

(45) Veröffentlichungstag und Bekanntmachung des Hinweises auf die Patenterteilung:
**29.08.2012 Patentblatt 2012/35**

(21) Anmeldenummer: **08802856.8**

(22) Anmeldetag: **10.10.2008**

(51) Int Cl.:
*C08L 23/12* (2006.01)          *D01F 8/06* (2006.01)
*D04H 3/00* (2012.01)          *B32B 5/24* (2006.01)
*B32B 27/32* (2006.01)          *D01D 5/098* (2006.01)
*D01F 6/06* (2006.01)          *D01F 6/46* (2006.01)
*D04H 13/00* (2006.01)          *D04H 3/005* (2012.01)
*D04H 3/16* (2006.01)

(86) Internationale Anmeldenummer:
**PCT/EP2008/008568**

(87) Internationale Veröffentlichungsnummer:
**WO 2009/049829 (23.04.2009 Gazette 2009/17)**

(54) **POLYPROPYLENMISCHUNG**

POLYPROPYLENE MIXTURE

MÉLANGE DE POLYPROPYLÈNES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.10.2007 DE 102007049031**

(43) Veröffentlichungstag der Anmeldung:
**23.06.2010 Patentblatt 2010/25**

(73) Patentinhaber: **Fiberweb Corovin GmbH**
**31224 Peine (DE)**

(72) Erfinder:
• **BORNEMANN, Steffen**
**31241 Klein Lisede (DE)**

• **HABERER, Markus**
**49080 Osnabrück (DE)**
• **HARTL, Helmut**
**38124 Braunschweig (DE)**

(74) Vertreter: **Schulz, Björn**
**Maxton Langmaack & Partner**
**Postfach 51 08 06**
**50944 Köln (DE)**

(56) Entgegenhaltungen:
WO-A-2008/021592     US-A1- 2004 038 612
US-A1- 2005 165 173     US-A1- 2005 182 198
US-A1- 2006 052 022     US-B1- 6 403 692

**Beschreibung**

Die vorliegende Erfindung betrifft die Verwendung einer Polypropylenmischung zur Herstellung eines Spinnvlieses mit erhöhter Dehnungseigenschaft, eine entsprechende Polypropylenmischung, ein Spinnvlies hergestellt mit einer derartigen Polypropylenmischung sowie ein Verfahren zur Herstellung eines Spinnvlieses mit erhöhter Dehnungseigenschaft.

Mischungen unterschiedlicher Polymere, die oft auch Blends genannt werden, sind insbesondere aus Polyolefinen hergestellt, um Spinnvliese herzustellen. Dabei handelt es sich beispielsweise um Polypropylen und Polyethylen, die miteinander gemischt werden. Mischungen von PP-Copolymeren mit Polyethylenen oder Ethylencopolymeren gehen beispielsweise aus der WO 01/73174 hervor. Will man eine Erhöhung einer Dehnbarkeit der Spinnvliesfaser erreichen, wird oftmals anstelle von Polypropylen ein thermoplastischelastomerisches Polyolefin verwendet. Dieses geht beispielsweise aus der WO 2006/067214 hervor. Aus der WO 2005/111282 wiederum geht hervor, einem ersten Polypropylen mindestens ein zweites Polyolefin zuzugeben dass dort als elastomeres oder plastisches Reaktorgrad-Polypropylen beschrieben ist, dass mindestens 3 Gew.-% eines Polyethylens aufweist Aus der US 2005/0165173 A1 wiederum geht die Verwendung einer Mischung aus einem ersten Propylen und einem zweiten Propylen hervor. Das erste Propylen soll bevorzugt ein Copolymer sein, wobei hierfür ein Ethylen oder anderes Olefin eingesetzt wird. Soll die Mischung zur Herstellung von Vliesmaterialien eingesetzt werden, wird in der Druckschrift vorgeschlagen, der Mischung ein zusätzliches Polymer belzugeben, dass mischbar oder nichtmischbar ist. Dieses kann ein Polyethylen sein. Für Bikomponentenfasern sind ebenfalls Materialkombinationen aus Polypropylen und Polyethylen beziehungsweise thermoplastischelastomerischen Polyolefinen und Polypropylen bekannt, so zum Beispiel aus der US 2006/0084342.

US 2005182198 (A1) offenbart ein Polypropylen-Blend, Fasern und Nonwoven aus diesen Blends, wobei das Polypropylenblend eine erste Polymerkomponente mit einer Molekulargewichtsverteilung zwischen 2.5 und 8 aufweist und eine zweite Polymerkomponente eine Molekulargewichtsverteilung zwischen 1.8 und 3 aufweist. Die Schmelzflußrate der der ersten Polymerkomponente ist größer als 30 g/10 min, während die Schmelzflußrate der zweiten Polymerkomponente kleiner als 40 g/10 min ist. Das Polypropolyenblend weist eine Schmelzflußrate von über 5 g/10 min auf.

Aus der US2006052022 (A1) ist ein dehnbares Nonwoven aus Fasern bekannt, wobei diese Fasern mindestens zwei Olefin-basierte Polymere enthalten. Diese Olefin-basierten Polymere gehören derselben Art an, weisen jedoch unterschiedliche Induktionsperioden bei der spannungsinduzierten Kristallisation, gemessen bei gleichen Temperaturen und Schergeschwindigkeiten, auf. Ein daraus gefertigtes Kompositmaterial enthält zumindest eine Lage des dehnbaren Nonwovens.

Aufgabe der vorliegenden Erfindung ist es, ein kostengünstiges Vlies mit trotzdem verbesserten Eigenschaften gegenüber herkömmlichen Polyproplyen-Vliesstoffen und deren Fasern zu schaffen, ohne dass es zu einer Veränderung weiterer Eigenschaften, insbesondere einer Reißkraft kommt.

Diese Aufgabe wird gelöst mit einer Verwendung einer Polypropylenmischung mit den Merkmalen des Anspruches 1, mit einer Polypropylenmischung mit den Merkmalen des Anspruches 4, mit einem Spinnvlies mit den Merkmalen des Anspruches 9 und einem Verfahren mit den Merkmalen des Anspruches 16. Weitere vorteilhafte Ausgestaltungen und Weiterbildungen sind in den jeweiligen Unteransprüchen angegeben.

Es wird eine Polypropylenmischung zur Verwendung zur Herstellung eines Spinnvlieses mit erhöhter Dehnungseigenschaft mit den Merkmalen des Anspruches 1 vorgeschlagen, wobei die Polypropylenmischung im Wesentlichen ein erstes Homopolypropylen und ein zweites Homopolypropylen aufweist, wobei ein MFR des ersten Homopolypropylens größer ist als ein MFR des zweiten Homopolypropylens, wobei das zweite Homopolypropylen einen Gewichtsanteil einer Polypropylenmischung von zumindest 8 Gew.-% bis maximal 15 Gew.-% aufweist, wobei im Wesentlichen das erste Homopolypropylen den restlichen Gewichtsanteil der Polypropylenmischung ausmacht, wobei das zweite Homopolypropylen einen MFR zwischen 2,3 und 5g/10min (230°C/2.16 kg) gemäß ISO 1133 aufweist, und eine Differenz des MFR des zweiten Homopolypropylens vom MFR des ersten Homopolypropylens zumindest 10g/10min beträgt, und das erste Homopolypropylen einen MFR zwischen 22 und 38 g/10 Min aufweist, das erste Homopolypropylen eine mittlere Molmasse $M_w$ aufweist, die zwischen 180.000 und 340.000 g/mol beträgt, das zweite Homopolypropylen eine mittlere Molmasse $M_w$ aufweist, die zwischen 300.000 und 500.000 g/mol beträgt und eine Molmassenvertellung MWD des zweiten Homopolypropylens zwischen $M_w/M_n = 3,1$ und $M_w/M_n = 4,8$ beträgt.

Vorzugsweise wird eine derartige Polypropylenmischung hergestellt, um damit ausschließlich aus den beiden Homopolypropylenen ohne geringe Beimischung eines anderen Polymers eine Spinnvliesfaser zu erzeugen. "Wesentlich" ist in einem derartigen Falle dann im Sinne dieser Erfindung so zu verstehen, dass neben den beiden Homopolypropylenen höchstens noch Zusatzstoffe wie beispielsweise funktionale Additive vorhanden sind, die Spinnvliesfaser aber selbst aus den beiden Homopolypropylenen besteht. Hierbei können dem Material noch übliche Zusätze hinzugefügt werden, beispielsweise Additive, Spinnverbesserer, Farbpigmente, UV-Stabilität erhöhende Additive, geruchshemmende Additive, Additive, die die Oberflächeneigenschaften der Spinnvliesfaser zusätzlich beeinflussen etc.. Daher besteht eine bevorzugte Ausgestaltung der Polypropylenmischung ausschließlich aus den beiden Homopolypropylenen, eventuell mit zusätzlichen Zusatzstoffen wie Additiven, ohne Hinzufügung aber eines weiteren Polymers.

Eine bevorzugte Nutzung der vorgeschlagenen Polypropylenmischung besteht bei Kern-Mantel-Fasern. Diese kann beispielsweise die Polypropylenmischung als Kernmaterial oder als Mantelmaterial aufweisen. Bevorzugt ist, dass ausschließlich im Kern bzw. Mantel die Polymermischung vorliegt. Auch besteht die Möglichkeit, dass die Polypropylenmischung mit einer ersten Zusammensetzung als Kernmaterial genutzt wird und die Polypropylenmischung mit einer zweiten Zusammensetzung als Mantelmaterial genutzt wird. Darüber hinaus besteht die Möglichkeit, dass die Polypropylenmischung auch in anderen Spinnvliesfasern eingesetzt wird, die unterschiedliche Materialien verteilt über den Querschnitt aufweisen.

Gemäß einer Ausgestaltung ist vorgesehen, dass das Spinnvlies ein Bikomponentenspinnvlies mit einem Kern aufweist, der im Wesentlichen das erste und das zweite Homopolypropylen aufweist, und einen Mantel aus insbesondere zum überwiegenden Teil Polyethylen hat. Gemäß einer weiteren Ausgestaltung besteht ein derartiges Spinnvlies aus dem ersten und dem zweiten Homopolypropylen im Kern. Ein derartiges Bikomponentenmaterial wird vorzugsweise in einem Laminat eingesetzt, beispielsweise mit einem Film. Der Film der so gebildeten zweiten Lage ist vorzugsweise aus Polyethylen. Vorzugsweise ist der Film aus Polyethylen auch mikroporös. Gemäß einer anderen Ausgestaltung ist der Film aus einem flüssigkeitsdichten Material, das eine Absorption und Desorption von Feuchtigkeit ermöglicht, wodurch eine Dampfdurchlässigkeit des Films und damit des Laminats sichergestellt ist. Beispielsweise kann das Filmmaterial Polyurethan aufweisen. Das Filmmaterial kann ein Homopolymer oder ein Copolymer aufweisen, wie auch ein- oder mehrlagig sein.

Als Materialien für einen Film eines Laminats oder als Filmbildner für ein Laminat können je nach Anwendungszweck verschiedene Materialien allein oder auch in Kombination, zum Beispiel in verschiedenen Bereichen des Spinnvlieses und/oder des Laminats genutzt werden. So kann eine Fläche des Spinnvlieses in verschiedenen Bereichen mit verschiedenen Materialien beaufschlagt oder auch freiliegend sein. Eine Ausgestaltung sieht eine Nutzung von ein oder mehreren Acrylpolymeren vor. Durch deren hydrophobe Wirkung kann eine Verbesserung eines Wasserabweisungsvermögens erzielt werden. Hierbei kann auch deren Reaktion ausgenutzt werden: beim Auftragen kommt es oftmals dazu, dass eine extreme Expansion unter Gelbildung stattfindet, wenn eine Vernetzung des Acrylsäurepolymers erfolgt. Dieses ermöglich beispielsweise eine besonders innige Verbindung mit einer benachbarten Lage, in die das Acrylpolymer eindringen kann, zumindest aber gut anhaftet. Zum anderen kann eine Einbeitung in das Acrylpolymer stattfinden, zum Beispiel von losen Faserenden oder Schlaufen des Spinnvlieses, wodurch eine Festigkeit der Verbindung beispielsweise erhöht wird.

Auch können Polyurethanverbindungen und/oder Latexverbindungen genutzt werden, eine Lage des Laminats zu bilden. Diese sind wasserdampfdurchlässig und flüssigkeitsundurchlässlg einstellbar, eine derartige Schicht kann beispielsweise gleichzeitig auch als Stützstruktur dienen. Eine Verwendung des Polyurethan ermöglich, eine diffusionsoffene Beschichtung einstellen zu können. Mittels des Latex besteht die Möglichkeit, eine diffusionsdichte Beschichtung einstellen zu können.

Eine weitere Ausgestaltung sieht eine Nutzung von ein oder mehreren Polyesterverbindungen vor. Ein Vorteil einer Polyesterlage ist die Möglichkeit, eine hohe Abriebfestigkeit zur Verfügung stellen zu können. Auch kann eine hohe Zugfestigkeit des Polyesters genutzt werden. Darüber hinaus kann eine hohe Wärmebeständigkeit, eine Isolier- und/oder eine Dämmeigenschaft von Polyester ebenfalls genutzt werden, wenn dieses als Lage eines Laminats mit dem Spinnvlies eingesetzt wird.

Bei einer Wärmedämmschicht eines Laminats kann beispielsweise eine Luftsperre mittels eines Films erzielt werden, der zum Beispiel nichtporös, wasserdicht aber wasserdampfdurchlässig ist.

Weiterhin besteht die Möglichkeit der Nutzung von Polyamiden, von EVA, PVAL und/oder PVC-Polymeren, um eine Filmschicht zu schaffen.

Eine zum aus der Polyolefinmischung bestehendes Spinnvlies benachbarte Lage eines Laminats oder im Laminat enthaltene Lage kann ein Film, ein Schaum, ein Gitter, ein Scrim, ein Gewebe oder eine sonstige Beschichtung sein. Eine benachbarte Lage kann einseitige auch an beidne Seiten vorliegen. Eine benachbarte Lage kann das Spinnvlies vollständig bedecken oder nur teilweisse. Die benachbarte Lage kann vollständig mit dem Spinnvlies verbunden sein oder nur in voneinander getrennten Bereichen. Die benachbarte Lage kann als eigenständige Lage auf das Vlies aufgebracht sein, aufextrudiert sein oder das Spinnvlies ist auf die Lage aufextrudiert worden. Die benachbarte Lage kann aufgeschäumt, aufgesprüht oder in sonstiger Weise appliziert werden. Ein derartiges Laminat kann ein oder mehrere Lagen aufweisen, gleiche oder auch unterschiedliche Lagen. Das Spinnvlies kann eine Außenlage des Laminats bilden. Das Spinnvlies kann auch zwischen zwei oder mehr Lagen eingebettet sein.

Gemäß einer weiteren Ausgestaltung ist vorgesehen, dass ein Laminat eine Vlieslage mit einem Polymer aufweist, das zumindest eines der folgenden Mitglieder der Gruppe umfassend PO, PET, biologisch abbaubares Polymer, PP, PE, Co-Polymer, antimikrobielles Additiv, hydrophil wirkendes Additiv, phophoreszierendes Additiv, fluoreszierendes Additiv, antistatisches Additiv und schmutzabweisendes Additiv aufweist.

Dabei können eine Vliesart oder auch verschiedene Vliesarten in einem Laminat eingesetzt werden Gemäß einer Ausgestaltung wird beispielsweise kardiertes Vlies, ein SMS-Material, ein Film-Vlies-Laminat, ein Airlaidmaterial, ein Spunlacematerial, ein Meltblownmaterial, ein elastisches Vlies, ein Bikomaterial und/oder ein Vlies verwendet, dessen Fasern bzw. Filamenten spezifische Geometrien aufweisen, zum Beispiel Trilobal oder andere Geometrien, insbesondere andere vom Querschnitt her nicht rundgeformte. Der Begriff Bikomponent oder Multikomponent bezieht sich im übrigen auf das Vorhandensein von Polymerphasen in diskreten strukturierten Segmenten, im Gegensatz zu Mischungen, wo die Domänen dahingehend tendieren, zu dispergieren, zufälligerweise oder unstrukturiert. Die Polymerkomponenten können in jeder Konfigurationsweise angeordnet sein, enthaltend Mantel-Kern-, Seite-an-Seite-, segmentierte Tortenstück-, Inseln-in-der-See- oder bestückte Multilobale-Geometrien als Vliesfaserquerschnitte.

Des weiteren ist bevorzugt, dass die Spinnvliesfaser aus der vorgeschlagenen Polymermischung besteht.

Gemäß einer Ausgestaltung ist beispielsweise vorgesehen, dass das zweite Homopolypropylen einen MFR-Bereich zwischen 2,3 und 3,5 MFR und einen MFR-Bereich zwischen 24 und 38 g/10min für das erste Homopolypropylen aufweist.

Das erste Homoplymer hat vorzugsweise einen MFR in einem Bereich zwischen 25 g/10min bis 35 g/10min.

Beispielsweise kann gemäß einer Ausgestaltung als erstes Homopolypropylen der Polypropylenmischung ein kommerziell unter dem Namen H502-25RG von Dow erhältliches Homopolypropylen genutzt werden. Dieses weist einen MFR von 25 g/10min gemäß ISO 1133 mit einer Dichte von 0,9 g/cm$^3$ auf. Ein weiteres kommerziell erhältliches Homopolypropylen weist einen MFR von 27 g/10min gemäß ISO 1133 mit einer Schmelztemperatur zwischen 161 °C und 165°C auf. Auch dieses ist als erstes Homopolymer einsetzbar. Beispielsweise kann auch ein unter der Bezeichnung HG455FB von Borealis vertriebenes Homopolypropylen genutzt werden. Ein anderes Homopolypropylen weist beispielsweise ebenfalls einen MFR von 25 g/10min auf, wobei dieses unter der Bezeichnung Moplen HP560R von Basell zur Verfügung steht.

Als zweites Homopolypropylen kann beispielsweise ein Homopolypropylen genutzt werden, welches nicht explizit für den Spinnvliesbereich oder Faserbereich ansonsten nutzbar wäre. Beispielsweise kann ein Homopolypropylen genutzt werden, welches einen MFR von 3,4 g/10min gemäß ISO 1133 aufweist. Dieses kann beispielsweise ein Material unter der Bezeichnung Moplen MP456J von Basell sein.

Die vorgeschlagene Polypropylenmischung ermöglicht somit, dass Homopolypropylene miteinander genutzt werden, wobei beispielsweise nur eines oder keines davon für den Spinnvliesbereich normalerweise benutzt wird. Insbesondere bezüglich des zweiten Homopolypropylens besteht die Möglichkeit, aus anderen Bereichen wie beispielsweise dem Injektionsgießen übliche Homopolypropylene für das Verwenden bei Spinnvliesanwendungen nutzbar zu machen. Beispielsweise kann vorgesehen sein, dass ein für die Vliesherstellung allein nutzbares Homopolypropylen teilweise durch ein zweites Homopolypropylen ersetzt wird, welches alleine nicht für das Spinnvliesherstellen geeignet wäre.

Eine weitere Ausgestaltung sieht vor, dass die Differenz des MFR zwischen dem ersten und dem zweiten Homopolypropylen nicht größer als 30 g/10min ist.

Des Weiteren ist vorgesehen, dass vorzugsweise ein Spinnvliesgewicht von 8 g/m$^2$ bis 30 g/m$^2$ hergestellt wird. Besonders bei leichtgewichtigen Vliesen in einem Gewichtsbereich von 10 g/m$^2$ bis 15 g/m$^2$ kann eine erhöhte Dehnungseigenschaft des Vlieses erzielt werden.

Gemäß einer weiteren Ausgestaltung ist vorgesehen, dass bei der Polypropylenmischung das erste Homopolypropylen mit einem Ziegler-Natta-Katalysator hergestellt worden ist, während das zweite Homopolypropylen mit einem Metallocen-Katalysator hergestellt worden ist. Eine andere Ausgestaltung sieht vor, dass das erste Homopolypropylen mit einem Metallocen-Katalysator hergestellt worden ist, während das zweite Homopolypropylen mit einem Ziegler-Natta-Katalysator hergestellt worden ist. Eine weitere bevorzugte Ausgestaltung sieht vor, dass das erste und das zweite Homopolypropylen jeweils mittels eines Ziegler-Natta-Katalysators hergestellt ist. Damit gelingt es, dass neben einem Spinnverhalten, welches durch den Schmelzfluss in Form des MFR wie auch durch eine molekulare Gewichtsverteilung $M_{wo}$ bestimmt wird, zusätzlichen Einfluss auf die Eigenschaften des Vlieses beziehungsweise der Vliesfaser durch gezielte Einstellung der Polypropylenmischung erzielen zu können. Bekannt ist, dass eine Verengung der Molekulargewichtsverteilung eine Verbesserung der Spinnerei erbringt. Wird der MFR-Wert erhöht, ergibt sich ebenfalls oftmals eine Verbesserung einer Spinnerei. Es hat sich nun herausgestellt, dass sich bei der Wahl einer engeren Molekulargewichtsverteilung eine Erhöhung der Reißkraft einstellt, andererseits sich aber eine Dehnbarkeit reduziert. Durch gezielte Nutzung von Katalysatoren kann nun die Eigenschaft des daraus jeweils gewonnenen Polypropylens gezielt verwendet werden, um Vliesfasern beziehungsweise Vliesstoffe mit massgeschneiderter Dehnbarkeit und Reißkraft erzielen zu können.

Neben einem Einsatz von Metallocen- und Ziegler-Natta-Katalysatoren zur Herstellung der Homopolymere können auch andere Katalysatoren genutzt werden. Dieses sind zum Beispiel Halb-Sanwich-Amido-Katalysatoren, wie sie beispielsweise aus der EP 0 416 815 A1 oder der EP 0 420 436 A1 hervorgehen, wie auch Dlimin-Komplexe, wie sie zum Beispiel aus der WO 96/23010 oder der WO 98/30612 hervorgehen, und auf die jeweils im Rahmen dieser Offenbarung in diesem Umfange hingewiesen wird.

Beispielsweise wird vorgesehen, dass das erste Homopolypropylen eine mittlere Molmasse $M_w$ hat, die zwi-schen 180.000 und 340.000 g/Mol beträgt. Des Weiteren ist es bevorzugt, wenn eine Molmassenverteilung MWD des ersten Homopolypropylens zwischen $M_w/M_n$ = 1,9 und $M_w/M_n$ = 3,7 beträgt. Die Erfindung sieht vor, dass eine Molmassenverteilung MWD des zweiten Homopolypropylens zwischen $M_w/M_n$=3,1 und $M_w/M_n$=4,8 beträgt.

Insbesondere aus diesen Werten für die mittlere Molmasse des ersten beziehungsweise zweiten Homopolypropylens beziehungsweise für die Molmassenverteilung des ersten beziehungsweise zweiten Homopolypropylens können verschiedene Polypropylenmlschungen hergestellt werden, bei denen zumindest eine der angegebenen Bereiche, vorzugsweise zwei und insbesondere alle vier Bereiche erfüllt werden.

Wird beispielsweise ein Metallocan-Katalysator genutzt, um ein Homopolypropylen der Polypropylenmischung zu fertigen, weist dieses vorzugsweise einen MFR zwischen 0,7 und 14 g/10min (230°C/2,16kg) gemäß ISO 1133, insbesondere zwischen 2 bis 14 g/10min, und einer Molmassenverteilung MWD zwischen $M_w/M_n$=1,9 und $M_w/M_n$=2,5 auf.

Gemäß einem weiteren Gedanken der Erfindung wird ein Spinnvlies hergestellt mit einer Polypropylenmischung wie oben dargestellt. Gemäß einer Ausgestaltung werden hierbei die Dehnungseigenschaften zumindest in CD-Richtung, vorzugsweise in CD- und MD Richtung größer eingestellt als im Vergleich zu einem gleichen Spinnvlies bei Nutzung eines Homopolypropylens statt der Polypropylenmischung, wobei das Homopolypropylen einen MFR aufweist, der sich rechnerisch als mathematisches Mittel aus dem MFR des ersten und des zweiten Homopolypropylens unter Berücksichtigung der jeweiligen Gewichtsanteile ergibt. Dieses wird wie folgt berechnet:

$$MFR_{Vergleich} = MFR_1 \times Gew.\text{-}\% + MFR_2 \times Gew.\text{-}\%.$$

Vorzugsweise ist das Spinnvlies vollständig aus der Polypropylenmischung hergestellt, wobei entsprechende Additive, Spinnverbesserer, Antioxidantien sowie oben dargestellt mit enthalten sein können, auf weitere Polymere hingegen wird verzichtet.

Das Spinnvlies kann beispielsweise kontinuierliche Fasern wie auch Stapelfasern aufweisen. Das Spinnvliesverfahren kann beispielsweise mit einer Vorrichtung ausgeführt werden, wie sie aus der US 2001/0004574 A1 oder der WO 96/16216 beziehungsweise der US 6,207,602 hervorgehen. Auch können Spinnvliesverfahren genutzt werden, wie sie aus der US 3,692,618, aus der US 5,032,329, der WO 03/038174 oder auch der WO 02/063087 hervorgehen. Auch können entsprechende Vorrichtungen zur Herstellung von Bikomponentenvliesen oder Mehrkomponentenvliesen ebenfalls eingesetzt werden, wie sie zum Stand der Technik gehören. Bevorzugt ist, wenn das Spinnvlies Bestandteil eines Laminats ist. Das Laminat kann zwei- oder mehrlagig sein. Bezüglich der Verfahren, Vorrichtungen, der möglichen Laminate und deren jeweiligen Einzelheiten wird im Rahmen der Offenbarung vollumfänglich auf die obigen Druckschriften Bezug genommen.

Beispielsweise ist das Spinnvlies, das die Polypropylenmischung aufweist, zumindest in einer Lage des Laminats enthalten. Beispielsweise kann dies die einzige Spinnvlieslage sein. Eine andere Lage kann beispielsweise ein Film sein. Es besteht jedoch ebenfalls die Möglichkeit, dass eine andere Lage ein anderes Spinnvlies, beispielsweise ein nach einem Meltblown-Verfahren hergestelltes Vlies ist. Insbesondere kann das Laminat ein SMS, ein FS oder ein SFS sein, mit S für Spinnvlies, F für Film und M für Meltblown.

Wird ein Film verwendet, ist dieses vorzugsweise ein mikroporöser Film. Es kann jedoch auch ein luftdichter Film Verwendung finden. Eine Anwendung sieht vor, dass das Laminat Bestanteil eines Backsheets eines Hygieneprodukts ist. Das Hygieneprodukt kann eine Windel, ein Damenhygieneprodukt oder sonstiges sein. Vorzugsweise ist hierbei eine Dehnbarkeit des verwendeten Vlieses auf die Dehnbarkeit des Film abgestellt. Bevorzugt weist das Vliesgewicht eines Laminats ein Vliesgewicht zwischen 10 g/m$^2$ und 13 g/m$^2$, wobei das Spinnvlies, vorzugsweise das ganze Laminat gereckt ist und eine Außenlage des Hygieneprodukts bildet.

Das Vlies, der Film und/oder das Laminat kann zusätzlich mit Hydrophilierungsmittel, mit UV-Stabilisatoren, mit γ-Stabilisatoren, Flammhämmern und/oder Farbe, insbesondere Farbpigmenten, ausgerüstet werden. Dadurch lässt sich ein Spinnvlies und insbesondere ein Laminat für verschiedenste Einsatzbereiche einsetzen. Vorzugsweise ist das Laminat sterilisierbar. Neben einem Einsatz in Sicherheitsbekleidung, insbesondere Schutzbekleidung, kann das Material auch in Medikalanwendungen, beispielsweise bei Abdeckungen, bei Verbandsmaterial und OP-Bekleidung genutzt werden. Insbesondere ist das Material virendicht. Testmethoden wie auch Werte hierfür gehen aus der US 2003/124324 hervor, auf die im Rahmen dieser Offenbarung diesbezüglich verwiesen wird.

Eine bevorzugte Anwendung des Spinnvlieses bzw. des Laminats betrifft die Verwendung in einer Schutzbekleidung. Beispielsweise kann eine gesamte Schutzbekleidung aus dem Laminat hergestellt werden. Auch kann nur ein Teil der Schutzbekleidung das Laminat aufweisen. Das Laminat selbst kann beispielsweise noch mit einer zusätzlichen Lage verbunden werden, Insbesondere mit einer Filmlage. Besonders bevorzugt ist die Verwendung in Industrieschutzbekleidung nach Richtlinie 89/686/EWG Kategorie 3 für den Einsatz als Chemikalienschutzbekleidung gemäß Typ 3, 4, 5 oder 6. Vorzugsweise ist hierfür vorgesehen, dass das Laminat die für diese Schutzbekleidung vorgesehenen Prüfmerkmale erfüllt. Bezüglich dieser Anforderungen wird auf die entsprechenden Prüfklassifikationen prEN 1511, prEN 1512 bzw. EN 466 und EN 465 für die Typen 3 und 4 für Einfachnutzung bzw. Mehrfachnutzung verwiesen. Die Anforderungen für den Typ 5 gehen aus der prEN ISO 13982-1:2000-11 hervor. Die Anforderungen für den Typ 6 gehen aus prEN 13034:1997-09 hervor. Auf diese Klassifikationen wird im Umfange dieser Offenbarung als Merkmale der verwendeten Laminate verwiesen.

Das Laminat kann auch für verschiedene weitere Anwendungen ebenfalls entsprechend ausgerüstet werden. Die Ausrüstung kann beispielsweise mittels eines Additivzusatzes erfolgen. Des Weiteren besteht die Möglichkeit, dass ein Oberflächenauftrag erfolgt. Dieses kann beispielsweise über eine Sprayeinrichtung, über Walzen, über Nassflotten oder andere Auftragungsvorrichtungen erfolgen. Des Weiteren besteht die Möglichkeit, das das Laminat einer Corona-Behandlung unterzogen wird. Dieses kann beispielsweise zur Einstellung spezieller Eigenschaften des Laminats erfolgen. Mögliche Ausrüstungen des Laminats, insbesondere durch Additivierung, sind insbesondere Antistatika, antimikrobielle Ausrüstungen, UV-beständige Ausrüstungen, Flammschutz, Alkoholabweisung, insbesondere bis 90 % Alkohol, und andere. Hierzu können verschiedenste Ausrüstungen bzw. Additivierungen Verwendung finden. Die Additivierung kann in nur einer Lage des Laminats wie aber auch in zumindest zwei Lagen bzw. in allen Lagen des Laminats vorliegen. Beispielsweise kann das Spinnvlies eine andere Ausrüstung aufweisen als der Film und umgekehrt. Dieses gilt insbesondere für die oben genannten Ausrüstungen.

Gemäß einer weiteren Ausgestaltung wird das Spinnvlies bzw. das Laminat im Verpackungsbereich verwendet. Beispielsweise wird das Laminat vorher und/oder nachher, d.h. vor und/oder nach dem Einpackvorgang sterilisiert. Das Laminat, vorzugsweise die gesamte Verpackung ist sterilisierbar. Es besteht auch die Möglichkeit, dass die Verpackung mehrere Lagen aufweist, wobei nur ein Teil dieser Lagen sterilisierbar ist. Beispielsweise ist ein sterilisiertes Laminat im Inneren der Verpackung angeordnet, während ein Äußeres der Verpackung nicht sterilisiert bzw. nicht sterilisierbar ist.

Weitere beispielhafte Anwendungen gehen aus den folgenden Dokumenten hervor, auf die im Rahmen der Offenbarung verwiesen wird. Die vorgeschlagene Polypropylenmischung kann anstatt der jeweils aus den Druckschriften hervorgehenden nicht-elastischen Materialien eingesetzt werden.

Aus der US 2003/00 50 589 A1 ist es bekannt, ein elastisches Element für die Herstellung einer Umhüllung beispielsweise für einen Finger zu verwenden. Für die Umhüllung sei ein Basismaterial zu nutzen, welches typischerweise ein Vlies wäre. Des Weiteren kann das Basismaterial auch verschiedene weitere Materialen, wie beispielsweise elastomere Komponenten aufweisen. Darunter seien insbesondere verschiedene Laminate wie elastische Laminate und Filmlaminate zu verstehen. Beispielsweise seien geeignete elastische Laminate, so genannte "stretch-bonded" und "neck-bonded" Laminate. Die jeweilige Definition dieser beiden Materialien sieht vor, dass ein elastisches Material mit einem nicht elastischen Material verbunden wird. Letzteres ist an Stelle der beschriebenen Materialien nun ein Spinnvlies aus der vorgeschlagenen Polymormischung.

Aus der US 6,368,444 geht eine Verstreckvorrichtung hervor, mittels der Filme, Vliese oder Laminate gleichzeitig in CD- und MD-Richtung verstreckt werden sollen. Die Vorrichtung soll geeignet sein, besonders mit Füllstoff gefüllte Filme geeignet verstrecken zu können. Auch sollen mit der Vorrichtung elastomere Vliese verstreckbar sein. Bei Laminaten werden die sogenannte "neck-stretch" Laminate verreckt, bei denen eine Lage aus einem elastischen Material und die andere Lage aus einem nichtelastischem Material bestehen. Auch hier wird das nichtelastische Material nun mit der vorgeschlagenen Polypropylenmischung hergestellt.

Aus der WO 99/55 942 A1 ist es bekannt, ein mit Füllmaterial versehenes Polymer auf ein Stapelvlies zu extrudieren, was anschleißend verstreckbar sei. Eine Faser des Stapelvlieses soll homogene oder inhomogene Phasengemische innerhalb der Faser durch verschiedene Polypropylen- und Polyethylen-Materialien aufweisen, um damit eine Festigkeit für eine Verstreckung in CD zu erhalten. Anstatt eine Mischung aus Polypropylen und Polyethylen wird nun die vorgeschlagene Polymermischung zur Herstellung der Spinnfasern genutzt.

Eine weitere Ausgestaltung sieht vor, dass das Spinnvlies eine zumindest um 20% höhere Dehnung in CD-Richtung, vorzugsweise in CD-Richtung und in MD-Richtung aufweist gegenüber einem zweiten Spinnvlies, dass im Wesentlichen ausschließlich aus dem ersten Homopolypropylen hergestellt ist und ansonsten identisch zum Spinnvlies höherer Dehnung ist.

Gemäß einer weiteren Ausgestaltung ist vorgesehen, dass beispielsweise die Dehnung in MD-Richtung annähernd unverändert bleibt gegenüber einem zweiten Spinnvlies, das im Wesentlichen ausschließlich aus dem ersten Homopolypropylen hergestellt ist und ansonsten identisch ist zum Spinnvlies höherer Dehnung ist. Bevorzugt besteht das zweite Spinnvlies aus dem ersten Homopolypropylen. Die Dehnung in CD-Richtung des mit der vorgeschlagenen Polypropylenmischung hergestellten Spinnvlieses ist dagegen um zumindest 15%, vorzugsweise sogar 25% höher bezüglich der Dehnung in CD-Richtung.

Ein weitere vorteilhafte Nutzung der vorgeschlagenen Polypropylenmischung ergibt sich bei der Herstellung des Spinnvlieses mit erhöhter Dehnungseigenschaft. Hierbei kann eine Spinnvliesvorrichtung genutzt werden, wie sie beispielsweise als sogenannte Reicofil 3-Anlage bekannt ist. Auch besteht die Möglichkeit, andere Reicofil-Technologien wie Reicofil 1, 2 oder 4 oder auch Reicofil-Biko zu nutzen. Das erste und das zweite Homopolypropylen können jeweils getrennt einer Extrudervorrichtung zugeführt und In der Extrudervorrichtung die Polypropylenmischung daraus hergestellt werden. Es ist nicht notwendig, dass ein Batch hergestellt wird, welches dem Extruder zugeführt wird. Vielmehr kann der Extruder selbst dazu genutzt werden, die Durchmischung des ersten und des zweiten Homopolypropylens auszuführen. Beispielsweise werden hierfür beide Homopolymere in den gleichen Trichter entsprechend dosiert eingefüllt. Darüber hinaus ergibt sich ein Vorteil durch Nutzung des ersten und des zweiten Homopolypropylens darin, dass diese miteinander mischbar sind, ohne dass es eines zusätzlichen Additivs bedarf, um die Mischbarkeit der beiden Materialien überhaupt erst erzielen zu können. Bevorzugt ist es, dass das erste und das zweite Homopolypropylen jeweils direkt in den gleichen Extruder zugeführt und dort gemischt werden. Beispielsweise wird gemäß einer Ausgestaltung vorgesehen, dass ein Ein-Schnecken-Extruder Verwendung findet.

Ein weiterer Vorteil der Nutzung der Polypropylenmischung ergibt sich wie folgt: eine Spinnvliesvorrichtung kann bei Nutzung der Polymermischung in zumindest einem Bereich mit einer geringen Temperatur stabil betrieben werden im Vergleich zu einer Nutzung eines Homopolypropylens, das einen MFR aufweist, der sich rechnerisch als mathematisches Mittel aus dem MFR des ersten und des zweiten Homopolypropylens unter Berücksichtigung der jeweiligen Gewichtsanteile ergibt. Die entsprechende Berechnungsformel ist oben angegeben. Ein Bereich kann hierbei ein Abschnitt einer Heizzone in einem Schneckenextruder sein. Es kann sich jedoch hierbei ebenfalls um die Temperierung des Spinnpakets handeln. Es hat sich herausgestellt, dass sich durch Nutzung der beiden Homopolypropylene ein geringerer Energiebedarf einstellt gegenüber einer Nutzung eines vergleichbaren einzelnen Homopolypropylens mit einem gemittelten MFR-Wert Des Weiteren hat sich herausgestellt, dass eine Erhöhung eines Extrusionsdrucks im Spinnpaket erfolgt, wenn ein Anteil des zweiten Homopolypropylens im Polymergemisch erhöht wird.

Ein Einfluss der beiden Homopolypropylene ergibt sich aus Test, die beispielhaft anbeigefügt sind.

| die temp | 235°C | 235°C | 245°C | 245°C | 260°C | 260°C |
|---|---|---|---|---|---|---|
| throughput | 0,4 g/min hole | 0,66 g/ min hole | 0,4 g/min hole | 0,66 g/ min hole | 0,4 g/min hole | 0,66 g/ min hole |
| ratio MFR 25 / 12 | spinnability | | | | | |
| 100 / 0 | n.t. | n.t. | OK | OK | OK | OK |
| 0 / 100 | n.t. | n.t. | n.t. | n.t. | OK | OK |

| die temp | 235°C | 235°C | 245°C | 245°C | 260°C | 260°C |
|---|---|---|---|---|---|---|
| throughput | 0,4 g/min hole | 0,66 g/ min hole | 0,4 g/min hole | 0,66 g/ min hole | 0,4 g/min hole | 0,66 g/ min hole |
| ratio MFR 25 / 12 | spin pack pressure (bar) | | | | | |
| 100 / 0 | | | 20 | 24 | 19 | 22 |
| 0 / 100 | | | | | 24 | 28 |

| die temp | 235°C | 235°C | 245°C | 245°C | 260°C | 260°C |
|---|---|---|---|---|---|---|
| throughput | 0,4 g/min hole | 0,66 g/ min hole | 0,4 g/min hole | 0,66 g/ min hole | 0,4 g/min hole | 0,66 g/ min hole |
| ratio MFR 25 / 12 | extruder power (W) | | | | | |
| 100 / 0 | | | 352 | 690 | 344 | 728 |
| 0 / 100 | | | | | 360 | 750 |

**Tabelle 1**

Aus der Tabelle 1 sind zum einen die Testergebnisse für die Spinnbarkeit, dargestellt als spinnability, für den Druck im Spinnpaket, dargestellt als spin pack pressure in Bar, und die Extruderleistung, dargestellt als extruder power (W) für zwei unterschiedliche Homopolypropylene mit einem MFR von 25 beziehungsweise 12 bei unterschiedlichen Temperaturen im Spinnplattenbereich und unterschiedlichen Lochdurchsätzen, angegeben als troughput. Daraus ist zu entnehmen, dass bei einem niedrigeren MFR ein höherer Druck, aber auch eine höhere Temperatur notwendig wird. Bei niedrigen Temperaturen und niedrigen Drücken hingegen ist das Homopolypropylen mit niedrigem MFR nicht verspinnbar. Durch die Polypropylenmischung so wie vorgeschlagen ergibt sich jedoch die Möglichkeit, dass eine Verspinnung des Homopolypropylens mit niedrigerem MFR durch entsprechenden Zusatz als zweites Homopolypropylen ermöglicht wird und gleichzeitig das Vlies eine erhöhte Dehnung gegenüber einem Vergleichsvlies wie oben dargestellt, erhält.

Die folgenden Beispiele geben einen Ausschnitt verschiedener Tests wieder, anhand derer die ausgeführte Erfindung näher erläuterbar ist.

Es wurden durch Schmelzspinnen Spinnvliese mit unterschiedlichem Flächengewicht hergestellt, und zwar in der Art, dass Mischungen aus Homopolypropylenen mit verschiedenem Schmelzfluß (Melt flow rate - MFR) zur Herstellung dieser Spinnvliese verwendet wurden. Eingesetzte Rohstoffe sind aus der Tabelle 2 zu entnehmen

Die Herstellung der Spinnvliese erfolgte auf einer sogenannten "Reicofil 3"-Spinnvlies-Pilotanlage. Dabei wurde nur die Zusammensetzung der Mischungen, nicht aber die gewählten Prozessbedingungen verändert. Additiv- oder Farbkonzentrate (Masterbaches) wurden diesen Mischungen nicht zugegeben. Dies kann aber durchaus vollständig erfolgen.

Die wichtigsten Prozessbedingungen sowie die Eigenschaften der hergestellten Spinnvliese mit unterschiedlichem Flächengewicht sind in Tabelle 2 bis 6 zusammengefasst.

**Tabelle 2.** Eingesetzte PP-Typen

| Type | Hersteller | MFR[1] | MWD[2] |
|------|-----------|--------|--------|
| | | (dg/10 min) | |
| Moplen HP560R | Basell | 25 | Sehr eng |
| Moplen HP456J | Basell | 3,4 | - |
| H779-12 | Dow | 12 | - |
| 1) Melt flow rate, entnommen dem Technischen Datenblatt  2) Molekulargewichtsverteilung, Angabe nach Technischem Datenblatt | | | |

**Tabelle 3.** Spinnvliese mit einem Flächengewicht von 10 g/m², hergestellt aus Mischungen eines PP mit MFR 25 und eines zweiten PP mit MFR 12.

| | | | Sample 10 A-1 | Sample 10 A-2 | Sample 10 A-3 | Sample 10 A-4 | Sample 10 A-5 |
|---|---|---|---|---|---|---|---|
| **Composition** | | | | | | | |
| | Moplen HP560R | | 100 | 95 | 90 | 85 | 80 |
| | H779-12 | | 0 | 5 | 10 | 15 | 20 |
| **Spinneret** | | | | | | | |
| | Capillaries per meter | | 5.000 | 5.000 | 5.000 | 5.000 | 5.000 |
| **Processing temperatures** | | | | | | | |
| | Extruder 1st zone | °C | 180 | 180 | 180 | 180 | 180 |
| | Extruder head | °C | 235 | 235 | 235 | 235 | 235 |
| | Spinneret | °C | 240 | 240 | 240 | 240 | 240 |
| **Throughput** | | | | | | | |
| | g/hole min | | 0,6 | 0,6 | 0,6 | 0,6 | 0,6 |
| **Calender oil temperature** | | °C | 150 | 150 | 150 | 150 | 150 |
| **Calender nip pressure** | | N/mm | 70 | 70 | 70 | 70 | 70 |

(fortgesetzt)

| Web formation | | | | | | |
|---|---|---|---|---|---|---|
| Base weight | g/m$^2$ | 10 | 10 | 10 | 10 | 10 |
| **Barrier properties** | | | | | | |
| Air permeability | l/m$^2$ s | 10.264 | 9.870 | 10.521 | 10.054 | 10.165 |
| **Mechanical properties** | | | | | | |
| F max MD | N /5mm | **19,4** | **22,3** | **20,9** | **21,1** | **19,2** |
| F max CD | N / 5mm | 10,9 | 12,2 | 11,9 | 12,7 | 12,6 |
| Elongation MD | % | **51,9** | **66,9** | **62,6** | **65,5** | **63,0** |
| Elongation CD | % | **62,5** | **76,3** | **76,0** | **78,7** | **79,4** |

So nimmt beispielsweise bei diesem 10g/m$^2$ Spinnvlies eine Dehnung durch stete Zugabe des zweiten Homopolypropylens in MD- wie auch In CD-Richtung zu. Bevorzugt ist beispielsweise bei einem Vliesgewicht von 10g/m$^2$ oder höher, beispielsweise bis 25 g/m$^2$ und einem MFR des zweiten Homopolypropylens, welches zwischen 1,7 und 4,5 g/10min beträgt, mit einem MFR des ersten Homopolypropylens von zumindest 20 g/10min, bevorzugt zwischen 25 g/10min und 45 g/10min, eine Zugabe des zweiten Homopolypropylens in einem Bereich von 3 Gew-% bis 12 Gew-%, insbesondere weniger als 10 Gew-% beträgt.

**Tabelle 4.** Spinnvliese mit einem Flächengewicht von 14 g/m$^2$, hergestellt aus Mischungen eines PP mit MFR 25 und eines zweiten PP mit MFR 12.

| | | Sample 14 A-1 | Sample 14 A-2 | Sample 14 A-3 | Sample 14 A-4 | Sampie 14 A-5 |
|---|---|---|---|---|---|---|
| **Composition** | | | | | | |
| Moplen HP560R | | 100 | 95 | 90 | 85 | 80 |
| H779-12 | | 0 | 5 | 10 | 15 | 20 |
| **Spinneret** | | | | | | |
| Capillaries per meter | | 5.000 | 5.000 | 5.000 | 5.000 | 5.000 |
| **Processing temperatures** | | | | | | |
| Extruder 1st zone | °C | 180 | 180 | 180 | 180 | 180 |
| Extruder head | °C | 235 | 235 | 235 | 235 | 235 |
| Spinneret | °C | 240 | 240 | 240 | 240 | 240 |
| **Throughput** | | | | | | |
| g/hole min | | 0,6 | 0,6 | 0,6 | 0,6 | 0,6 |
| **Calender oil temperature** | °C | 150 | 150 | 150 | 150 | 150 |
| **Calender n p pressure** | N/mm | 70 | 70 | 70 | 70 | 70 |

(fortgesetzt)

| Web formation | | | | | | |
|---|---|---|---|---|---|---|
| Base weight | g/m² | 14 | 14 | 14 | 14 | 14 |
| **Barrier properties** | | | | | | |
| Air permeabilit y | l /m² s | 7.575 | 7.595 | 8.020 | 7.608 | 7.815 |
| **Mechanical properties** | | | | | | |
| F max MD | N /5mm | 32,4 | 32,5 | 31,1 | 29,9 | 31,4 |
| F max CD | N /5mm | 18,8 | 18,6 | 19,3 | 20,4 | 18,8 |
| Elongation MD | % | **61,9** | **70,9** | **72,4** | **70,6** | **83,1** |
| Elongation CD | % | **68,0** | **73,1** | **78,0** | **91,1** | **83,5** |

Bevorzugt ist beispielsweise bei einem Vliesgewicht von 10g/m² oder höher, beispielsweise bis 25 g/m² und einem MFR des zweiten Homopolypropylens, welches zwischen 10 und 14 g/10min beträgt, mit einem MFR des ersten Homopolypropylens von zumindest 20 g/10min, bevorzugt zwischen 25 g/10min und 45 g/10min, eine Zugabe des zweiten Homopolypropylens in einem Bereich von 8 Gew-% bis 25 Gew-%, insbesondere mehr als 10 Gew-% beträgt.

**Tabelle 5**. Spinnvliese mit einem Flächengewicht von 17 g/m², hergestellt aus Mischungen eines PP mit MFR 25 und eines zweiten PP mit MFR 12.

| | | Sample 17 A-1 | Sample 17 A-2 | Sample 17 A-3 | Sample 17 A-4 | Sample 17 A-5 |
|---|---|---|---|---|---|---|
| **Composition** | | | | | | |
| Moplen HP560R | | 100 | 95 | 90 | 85 | 80 |
| H779-12 | | 0 | 5 | 10 | 15 | 20 |
| **Spinneret** | | | | | | |
| Capillaries per meter | | 5.000 | 5.000 | 5.000 | 5.000 | 5.000 |
| **Processing temperatures** | | | | | | |
| Extruder 1st zone | °C | 180 | 180 | 180 | 180 | 180 |
| Extruder head | °C | 235 | 235 | 235 | 235 | 235 |
| Spinneret | °C | 240 | 240 | 240 | 240 | 240 |
| **Throughput** | | | | | | |
| g/hole min | | 0,6 | 0,6 | 0,6 | 0,6 | **0,6** |
| **Calender oil temperature** | °C | 150 | 150 | 150 | 150 | 150 |
| **Calender nip pressure** | N/mm | 70 | 70 | 70 | 70 | 70 |
| **Web formation** | | | | | | |
| Base weight | g/m² | **17** | **17** | **17** | **17** | **17** |

(fortgesetzt)

| Barrier properties | | | | | | |
|---|---|---|---|---|---|---|
| | Air permeability | l/m³ s | 6.640 | 6.293 | 6.600 | 6.467 | 6.311 |

| Mechanical properties | | | | | | | |
|---|---|---|---|---|---|---|---|
| | F max MD | N / 5mm | 40,2 | 40,8 | 38,8 | 38,9 | 39,4 |
| | F max CD | N / 6mm | 24,8 | 25,0 | 25,1 | 24,5 | 26,6 |
| | Elongation MD | % | **67,4** | **75,3** | **76,7** | **80,7** | **88,1** |
| | Elongation CD | % | **74,6** | **80,8** | **89,1** | **84,1** | **101,3** |

Bevorzugt ist beispielsweise bei einem Vliesgewicht von 10g/m² oder höher, beispielsweise bis 25 g/m² und einem MFR des zweiten Homopolypropylens, welches zwischen 10 und 14 g/10min beträgt, mit einem MFR des ersten Homopolypropylens von zumindest 25 g/10min, bevorzugt zwischen 30 g/10min und 55 g/10min, eine Zugabe des zweiten Homopolypropylens in einem Bereich von 10 Gew-% bis 25 Gew-%, insbesondere mehr als 12 Gew-% beträgt.

**Tabelle 6.** Spinnvliese, hergestellt aus Mischungen eines PP mit MFR 25 und eines zweiten PP mit MFR 3, mit einem Flächengewicht von 10 bzw. 15 g/m².

| | | | Sample 10 B-1 | Sample 10 B-2 | Sample 15 B-1 | Sample 15 B-2 |
|---|---|---|---|---|---|---|
| **Composition** | | | | | | |
| | Moplen HP560R | | 100 | 96 | 100 | 96 |
| | Moplen HP456J | | 0 | 4 | 0 | 4 |
| **Spinneret** | | | | | | |
| | Capillaries per meter | | 5.000 | 5.000 | 5.000 | 5.000 |
| **Processing temperatures** | | | | | | |
| | Extruder 1st zone | °C | 180 | 180 | 180 | 180 |
| | Extruder head | °C | 235 | 235 | 235 | 235 |
| | Spinneret | °C | 240 | 240 | 240 | 240 |
| **Throughput** | | | | | | |
| | g/hole min | | 0,6 | 0,6 | 0,6 | 0,6 |
| **Calender oil temperature** | | °C | 150 | 150 | 150 | 150 |
| **Calender nip pressure** | | N/mm | 70 | 70 | 70 | 70 |
| **Web formation** | | | | | | |
| | Base weight | g/m² | 10 | 10 | 15 | 16 |
| **Barrier properties** | | | | | | |
| | Air permeability | l/m² s | 8.916 | 8.934 | 6.145 | 5.885 |

(fortgesetzt)

| Mechanical properties | | | | | | |
|---|---|---|---|---|---|---|
| F max MD | N / 5mm | 25,1 | 25,2 | 40,2 | 39,4 |
| F max CD | N / 5mm | 11,3 | 12,0 | 21,1 | 23,2 |
| Elongation MD | % | **60,9** | **81,9** | **73,4** | **86,4** |
| Elongation CD | % | **70,1** | **84,8** | **79,5** | **101,4** |

Wie die Messungen zeigen, wird beispielsweise bei einem niedrigeren MFR des zweiten Homopolypropylens bevorzugt ein geringerer Gewichtsprozentsatz dem ersten Homopolypropylen zugegeben, um eine Zunahme der Dehnung von mehr als 10%, Insbesondere mehr als 15% zu erhalten.

Die Wirkung der erfindungsgemäßen Mischungen kann wie folgt zusammengefasst werden:

**Tabelle 7**

| | MD-Dehnung | CD-Dehnung |
|---|---|---|
| Mischung MFR 25 + MFR 12 | 10 g/m$^2$: Erhöhung um > 20%, im wesentlichen über den gesamten vorgeschlagenen Konzentrationsbereich des MFR 12<br><br>14 g/m$^2$: Erhöhung um > 10%, sogar > 30% bei 20% Zugabe<br><br>17 g/m$^2$: Erhöhung um > 10%, steigend als Fkt. der Zugabe | 10 g/m$^2$: Erhöhung um > 20%, im wesentlichen über den gesamten vorgeschlagenen Konzentrationsbereich des MFR 12<br><br>14 g/m$^2$: Erhöhung um > 10%, steigend als Fkt. der Zugabe<br><br>17 g/m$^2$: Erhöhung um > 10%, steigend als Fkt. der Zugabe |
| | | |
| Mischung MFR 25 + MFR 3 | 10 g/m$^2$: Erhöhung um > 30%, bei 4% Zusatz<br><br>15 g/m$^2$: Erhöhung um > 15%, bei 4% Zusatz | 10 g/m$^2$: Erhöhung um > 20%, bei 4% Zusatz<br><br>15 g/m$^2$: Erhöhung um > 20%, bei 4% Zusatz |

Hieraus folgt, dass bezüglich eines jeden Flächengewichts des Vlieses sich der Einfluss der Dehnung besonders stark bemerkbar macht und dieses auch speziell über die Zusammensetzung der Polypropylenmischung einstellbar ist: so können mit geringen Vliesgewichten ebensolche Steiferungen der Dehnung erzielt werden wie bei einem höheren Flächengewicht. So wird bevorzugt eine Erhöhung von zumindest 20% in MD-Dehnung erzielt, beispielsweise für ein Flächengewicht von 10 g/m$^2$ bis 15 g/m$^2$. Bevorzugt wird ebenfalls eine CD-Dehnungserhöhung von zumindest 20% erzielt.

Den Einfluss einer vorgeschlagenen Polypropylenmischung, beispielsweise bei einer Bikomponentenfaser, bei der im Kern die vorgeschlagene Polypropylenmischung vorgesehen ist, geht aus der nachfolgenden Tabelle 7 hervor.

Tabelle 8

| | Kern:Standard-PP + MFR 12; Mantel: PE Kern/Mantel-Verhältnis: 60/60 | | | | Kern:Standard-PP + MFR 12; Mantel: PE Kern/Mantel-Verhältnis: 70/30 | | | |
|---|---|---|---|---|---|---|---|---|
| **Composition** | | | | | | | | |
| **Core** Moplen HP560R | 100 | 95 | 90 | 80 | 100 | 95 | 90 | 80 |
| Moplen HP500N | 0 | 5 | 10 | 20 | 0 | 5 | 10 | 20 |
| **Sheath** Aspun 6834 | 100 | 100 | 100 | 100 | 100 | 100 | 100 | 100 |

(fortgesetzt)

| Spinneret | | | | | | | | | |
|---|---|---|---|---|---|---|---|---|---|
| Capillaries per meter | | 5.000 | 5.000 | 5.000 | 5.000 | 5.000 | 5.000 | 5.000 | 5.000 |
| **Processing temperatures** | | | | | | | | | |
| Extruder 1st zone | °C | 180 | 180 | 180 | 180 | 180 | 180 | 180 | 180 |
| Extruder head | °C | 230 | 230 | 230 | 230 | 230 | 230 | 230 | 230 |
| Spinneret | °C | 240 | 240 | 240 | 240 | 240 | 240 | 240 | 240 |
| **Throughput** | | | | | | | | | |
| g/hole min | | 0,6 | 0,6 | 0,6 | 0,6 | 0,6 | 0,6 | 0,6 | 0,6 |
| **Calender oil temperature** | °C | 136 | 136 | 136 | 136 | 136 | 136 | 136 | 136 |
| **Calender nip pressure** | N/mm | 70 | 70 | 70 | 70 | 70 | 70 | 70 | 70 |
| **Mechanical properties** | | | | | | | | | |
| F max MD | N / 5cm | 27,4 | 30,6 | 28,3 | 29,2 | 26,9 | 25,1 | 26,8 | 25,9 |
| F max CD | N / 5cm | 11,3 | 12,2 | 11,0 | 15,3 | 10,6 | 10,1 | 11,5 | 12,7 |

Weiterhin hat sich überraschend herausgestellt, dass es trotz unterschiedlicher Zumischung an Gewichtsanteilen des zweiten Homopropylens zum ersten Homopolypropylen ein Temperaturbereich bei einem Thermokalandrieren gibt, der weniger als 10°C beträgt, innerhalb dessen der Einfluss des Thermobondierens besonders ausgeprägt feststellbar ist. Dieses ergibt sich aus der nachfolgenden Tabelle 8.

| | Elongation at peak MD (%) | | | |
|---|---|---|---|---|
| Calander oil temperature (°C) | 95% HP560R + 5% H779-12 | 80% HP560R + 10% H779-12 | 85% HP560R + 15% H779-12 | 80% HP560R + 20% H779-12 |
| **135** | 38,1 | 45,2 | 40,3 | 43,9 |
| **141** | 60,3 | 63,4 | 76,7 | 71,4 |
| **147** | 78,6 | 80,9 | 93,8 | 92,1 |
| **160** | 70,1 | 79,4 | 88,3 | 91,9 |
| **153** | 72,8 | 78,1 | 81,4 | 79,4 |
| **166** | 67,3 | 74,5 | 67,6 | 82,5 |
| | Elongation at peak CD (%) | | | |
| **135** | 40,0 | 43,7 | 42,6 | 45,7 |
| **141** | 63,5 | 59,4 | 70,3 | 75,8 |
| **147** | 79,7 | 86,8 | 96,0 | 100,2 |
| **150** | 78,7 | 87,0 | 91,9 | 96,9 |
| **153** | 81,0 | 88,8 | 88,7 | 95,1 |
| **156** | 74,7 | 88,2 | 84,3 | 88,9 |

Hier sind zum einen die verschiedenen Kalanderöltemperaturen in Grad Celsius angegeben, zum anderen die verschiedenen Polypropylenmischungen, aus denen jeweils eine einzelne Spinnvliesfaser besteht. Hierbei ist zu erkennen, dass ein Temperaturbereich zwischen 147°C und 153°C besonders bevorzugt wird, da außerhalb dieses Temperaturprofils ein Abfall der Werte feststellbar ist. Ausnahme hierbei ist bei einer Zumischung von 20 Gew.-% des zweiten Homopolypropylens festzustellen. Dort ist der Temperaturwert von 156°C höher in Bezug auf den MD-Wert gegenüber demjenigen bei 143°C. Bevorzugt wird daher eine Kalanderoberflächentemperatur eingestellt, die im Bereich zwischen 137°C und 143°C im Betrieb liegt, d.h. während des Thermobondierens. Diese Absenkung gegenüber der Öltemperatur ergibt sich aufgrund von zum Beispiel konvektiven Wärmeströmen, Wärmeabgaben an das Vlies etc.

Bestimmung der Eigenschaften der Spinnvliese

Die Ermittlung des *Filamenttiters* erfolgte mittels eines Mikroskopes. Die Umrechnung des gemessenen Titers (in Mikrometern) In Dezltex erfolgte nach folgender Formel (Dichte PP = 0,91 g/cm$^3$):

$$\left(\frac{Titer_{\mu m}}{2}\right)^2 \cdot \pi \cdot \rho \left[\frac{g}{cm^3}\right] \cdot 0,01 = Titer_{dtex}\left[\frac{g}{10^4\,m}\right]$$

Die *Flächengewichtsbestimmung* der Spinnvliese erfolgte nach DIN EN 29073-1 an 10 x 10 cm großen Probekörpern.

Die Messung der *Luftdurchlässigkeit* der Spinnvliese erfolgte gemäß DIN EN ISO 9237. Die Fläche des Meßkopfes betrug 20 cm$^2$, der angelegte Prüfdruck 200 Pa.

Die *mechanischen Eigenschaften* der Spinnvliese wurden nach DIN EN 29073-3 ermittelt. Einspannlänge: 100 mm, Probenbreite 50 mm, Vorschub 200mm/min. "Höchstzugkraft" ist die beim Durchlaufen der Kraft- Dehnungskurve maximal erreichte Kraft, "Höchstzugkraftdehnung" ist die zur Höchstzugkraft zugehörige Dehnung in der Kraft- Dehnungskurve.

Weltere vorteilhafte Ausgestaltungen und Weiterbildungen gehen aus den nachfolgenden Zeichnungen hervor. Die dabei jeweils vorgestellten Beispiele sind jedoch nur beispielhaft und nicht beschränkend auszulegen. Vielmehr können einzelne oder mehrere Merkmale von verschiedenen Figuren mit anderen Merkmalen aus anderen Figuren oder aus der obigen Beschreibung miteinander zu Weiterbildungen verknüpft werden. Es zeigen:

Fig. 1:　eine schematische Ansicht einer Spinnvliesvorrichtung, bei der die Polypropylenmischung im Extruder hergestellt wird,

Fig. 2:　ein mittels der Polypropylenmischung hergestelltes Spinnvlies,

Fig. 3:　ein Laminat, enthaltend ein Spinnvlies aus der vorgeschlagenen Polypropylenmischung, und

Fig. 4:　ein Laminat, aufweisend ein Spinnvlies aus der Polypropylenmischung verbunden mit einem Film.

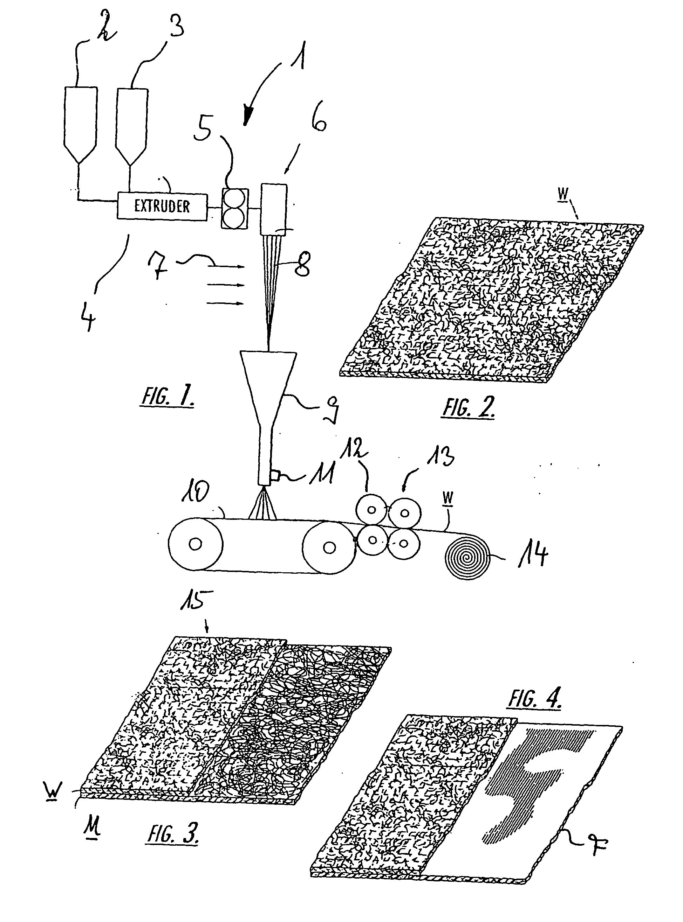

Fig. 1 zeigt in beispielhafter schematischer Ausgestaltung eine erste Spinnvliesvorrichtung 1. Diese weist eine erste Speichereinheit 2 für ein erstes Homopolypropylen und eine zweite Speichereinheit 3 für ein zweites Homopolypropylen auf. Die Speichereinheiten können erweitert sein, wenn beispielsweise noch zusätzliches Material wie Additive hinzuzufügen ist, beispielsweise bei Nutzung des ersten und des zweiten Homopolypropylens mit zusätzlichen anderen Polymeren bei Bikomponentenfasern. Das erste und das zweite Homopolypropylen werden sodann in einer Extrudervorrichtung 4 miteinander gemischt, wobei diese dort aufgeschmolzen werden. Durch die Wirkung einer Extruderschnekke im inneren der Extrudervorrichtung erfolgt die Durchmischung bis zum Erreichen einer Spinnpumpe 5. Von der Spinnpumpe aus wird das so hergestellte Polypropylengemisch zu den Spinnpaketen 6 geführt, wo es sodann austritt und durch eine Fluidanströmung 7 gekühlt wird. Die Fluidanströmung 7 nutzt hierzu vorzugsweise Luft. Die Luft kann konditioniert sein. Dieser Quench kann ein- wie auch zweiseitig in einem offenen oder geschlossenen System erfolgen. Ein so gebildeter Faservorhang 8 wird sodann einer Verstreckeinheit 9 zugeführt. Von der Verstreckeinheit 9 werden die gebildeten Vliesfasern auf einem Ablegeband 10 abgelegt. Der Verstreckeinheit 9 zugeordnet kann hierbei eine elektrostatische Aufladeeinheit 11 zugeordnet sein. Ebenfalls kann ein Diffusor an der Verstreckeinheit 9 direkt oder benachbart dazu in Strömungsrichtung der Fasern vor dem Ablegeband 10 angeordnet sein. Auf diese Weise kann eine Aufspreizung und damit verbesserte Ablage der Vliesfasern erfolgen. Die Vliesfasern werden anschließend nach der Ablage beispielsweise durch einen Thermobondierkalander 12 untereinander verbunden. Anschließend kann beispielsweise ein sogenanntes Strecken des gebildeten Spinnvlieses W erfolgen. Angedeutet ist dieses durch eine Verstreckeinheit 13. Die Verstreckeinheit 13 kann beispielsweise eine Ring-Rolling-Einheit aufweisen. Bei dieser greifen Scheiben einander gegenüberliegender Kalanderwalzen ineinander und verstrecken auf diese Weise das Material, Bezüglich des Verstreckens wird zum Beispiel auf die US 6,042,575 verwiesen. Diese beinhaltet unter anderem in der Beschreibung ein "ringrolled topsheet" mit dem Verweis auf ein weiteres Patient, die US 4,107,364, in welchem ein Ring-Rolling-Prozess in der Beschreibung und den Zeichnungen erwähnt wird. Eine Verstreckung kann in CD- wie auch in MD-Richtung erfolgen. So kann zusätzlich oder anstelle einer Kalandereinheit auch ein Streckrahmen genutzt werden.

Anschließend wird das Spinnvlies W mittels einer Wickeleinheit 14 aufgewickelt und damit transportfertig gemacht.

Die dargestellte Spinnvliesvorrichtung 1 ist nur beispielhaft. In diese können eine oder mehrere zusätzliche Spinnbalken integriert werden. Dies können ebenfalls Spinnbalken zur Herstellung kontinuierlicher Vliesfasern sein. Es können jedoch auch eine oder mehrere Meltblownbalken sein. Des Weiteren besteht die Möglichkeit, dass vorgefertigtes Material von einer Abwicklereinheit, die nicht näher dargestellt ist, der Spinnvliesvorrichtung 1 zugeführt wird. Das vorgefertigte Material kann beispielsweise ein Vlies, ein Film oder auch ein Laminat aus verschiedenen Materialien sein. Des Weiteren besteht die Möglichkeit, das nach der dargestellten Spinnvliesvorrichtung, aber vor dem Thermobondierkalander fließfähiges Polymermaterial zugeführt wird, das einen Film ausbilden kann. Dieses kann beispielsweise mit Kreide oder einem sonstigen Füllstoff gefüllt sein. Durch das anschließende Thermobondieren wird eine zusätzliche Festigkeit zwischen den zumindest zwei Lagen enthaltend das Spinnvlies geschaffen. Das anschließende Verstrecken schafft beispielsweise eine Luftdurchlässigkeit beziehungsweise Gasdurchlässigkeit beim Firmaterial. Dieses kann auf diese Weise mikroporös werden. Durch die Höhe der Verstreckung kann die Mikroporosität und damit die Eigenschaft des Laminats eingestellt werden. Eine Unterstützung der Haftung erfolgt vorzugsweise, indem ein oder mehrere zusätzliche Bindungen zwischen der ersten und der zweiten Lage ausgeführt werden. Eine Bindung zwi-schen den Lagen kann beispielsweise mittels eines Thermobondingschrittes, mittels eines Vernadelns, mittels einer Wasserstrahlverfestigung oder Ultraschallverschweißens ausgeführt werden. Auch können Klebefasern genutzt werden.

Fig. 2 zeigt eine beispielhafte Darstellung des Spinnvlieses W. Dieses weist eine Oberflächenmusterung auf, die beispielsweise durch den Thermobondierschritt und entsprechender Prägeoberflächen ermöglicht wird. Des Weiteren kann die Oberfläche mit losen Fasern versehen sein, wobei jedoch der überwiegende Teil durch das Thermobondieren mit umgebenden Fasern verbunden ist. Eine Dehnung in CD- beziehungsweise In MD-Richtung wird durch die genutzten Polypropylenmischung gegenüber einer Verwendung eines einzeinen Homopolymers entsprechend dem MFR-Wert erhöht.

Fig. 3 zeigt beispielhaft ein Laminat 15 mit dem aus Fig. 2 schon bekannten Spinnvlies W. Verbunden damit ist beispielsweise eine Meltblown-Lage M. Das dadurch gebildete Laminat kann beispielsweise bei Hygieneanwendungen, In Filteranlagen oder in sonstigen Applikationen Verwendung finden.

Fig. 4 zeigt ein Laminat aus einem Film F und dem Spinnvlies W. Durch die dargestellten Querrillen im Film F ist angedeutet, dass der Film verstreckt ist. Dadurch ist beispielsweise eine Mikroporosität des Films erzielt. Neben einem mikroporösen Film F kann jedoch auch eine andere Art von Film genutzt werden, beispielsweise ein diffusionsoffener Film. Dieser ermöglicht Winddichtigkeit, aber gleichzeitig die Weitergabe von Feuchte. Ein derartiges Laminat kann beispielsweise in Hygieneanwendungen Verwendung finden, insbesondere aber auch im Baubereich, beispielsweise als Dachunterepannbahn oder als Wandabdeckung.

**Patentansprüche**

1. Verwendung einer Polypropylenmischung zur Herstellung eines Spinnvlieses mit erhöhter Dehnungseigenschaft, wobei die Polypropylenmischung im wesentlichen ein erstes Homopolypropylen und ein zweites Homopolypropylen aufweist, wobei ein MFR des ersten Homopolypropylens größer ist als ein MFR des zweiten Homopolypropylens, wobei das zweite Homopolypropylen einen Gewichtsanteil an der Polypropylenmischung von zumindest 8 Gew.-% bis 15 Gew.-% aufweist, wobei im wesentlichen das erste Homopolypropylen den restlichen Gewichtsanteil der Polypropylenmischung ausmacht, wobei das zweite Homopolypropylen einen MFR zwischen 2,3 und 5 g/10 min (230°C/2.16kg) gemäß ISO 1133 aufweist, und eine Differenz des MFR des zweiten Homopolypropylens vom MFR des ersten Homopolypropylens zumindest 10g/10min beträgt, und das erste Homopolypropylen einen MFR zwischen 22 und 38 g/10 Min aufweist, das erste Homopolypropylen eine mittlere Molmasse $M_w$ aufweist, die zwischen 180.000 und 340.000 g/mol beträgt, das zweite Homopolypropylen eine mittlere Molmasse $M_w$ aufweist, die zwischen 300.000 und 500.000 g/mol beträgt und eine Molmassenverteilung MWD des zweiten Homopolypropylens zwischen $M_w/M_n$ = 3,1 und $M_w/M_n$ = 4,8 beträgt.

2. Verwendung nach Anspruch 1, **dadurch gekennzeichnet, dass** die Polypropylenmischung als Kernmaterial oder Mantelmaterial einer Kern-Mantelfaser eingesetzt wird.

3. Verwendung nach Anspruch 1 oder 2, **dadurch gekennzeichnet, dass** nur die Polypropylenmischung zur Herstellung einer Spinnvliesfaser eingesetzt wird.

4. Polypropylenmischung zur Spinnvliesherstellung nach einem der Ansprüche 1 bis 3, **dadurch gekennzeichnet, dass** die Polypropylenmischung im wesentlichen ein erstes Homopolypropylen und ein zweites Homopolypropylen aufweist, wobei ein MFR des ersten Homopolypropylens größer ist als ein MFR des zweiten Homopolypropylens, wobei das zweite Homopolypropylen einen Gewichtsanteil an der Polypropylenmischung von zumindest 8 Gew.%

bis 15 Gew.% aufweist, wobei im wesentlichen das erste Homopolypropylen den restlichen Gewichtsanteil der Polypropylenmischung ausmacht, wobei das zweite Homopolypropylen einen MFR zwischen 2,3 und 5 g /10min (230°C/2.16kg) gemäß ISO 1133 aufweist, und eine Differenz des MFR des zweiten Homopolypropylens vom MFR des ersten Homopolypropylens zumindest 10g/10min (230°C/2.16kg) gemäß ISO 1133 beträgt, und das erste Homopolypropylen einen MFR zwischen 22 und 38 g/10 Min aufweist, das erste Homopolypropylen eine mittlere Molmasse $M_w$ aufweist, die zwischen 180.000 und 340.000 g/mol beträgt, das zweite Homopolypropylen eine mittlere Molmasse $M_w$ aufweist, die zwischen 300.000 und 500.000 g/mol beträgt und eine Molmassenverteilung MWD des zweiten Homopolypropylens zwischen $M_w/M_n= 3,1$ und $M_w/M_n= 4,8$ beträgt.

5. Polypropylenmischung nach Anspruch 4 , **dadurch gekennzeichnet, dass** das erste Homopolypropylen mit einem Ziegler-Natta-Katalysator hergestellt worden ist, während das zweite Homopolypropylen mit einem Metallocen-Katalysator hergestellt worden ist.

6. Polypropylenmischung nach Anspruch 4, **dadurch gekennzeichnet, dass** das erste Homopolypropylen mit einem Metallocen-Katalysator hergestellt worden ist, während das zweite Homopolypropylen mit einem Ziegler-Natta-Katalysator hergestellt worden ist.

7. Polypropylenmischung nach einem der Ansprüche 4 bis 6, **dadurch gekennzeichnet, dass** eine Molmassenverteilung MWD des ersten Homopolypropylens zwischen $M_w/M_n= 2,3$ und $M_w/M_n=3,7$ beträgt.

8. Polypropylenmischung nach Anspruch 4, **dadurch gekennzeichnet, dass** das erste und das zweite Homopolypropylen jeweils mittels einen Ziegler-Natta-Katalysators hergestellt sind.

9. Spinnvlies mit Spinnvliesfasern bestehend über den gesamten Querschnitt oder bestehend bei Mehrkomponentenfasern In einem von einer anderen Komponente abgegrenzten Bereich des Querschnitts im wesentlichen aus einer Polypropylenmischung gemäß einem der Ansprüche 1 bis 8.

10. Spinnvlies nach Anspruch 9, **dadurch gekennzeichnet, dass** die Dehnungseigenschaften in CD-Richtung, vorzugsweise In CD- und in MD-Richtung des Spinnvlieses größer sind im Vergleich zu einem gleichen Spinnvlies bei Nutzung eines Homopolypropylens anstatt der Polypropylenmischung, wobei das Homopolypropylen einen MFR aufweist, der sich rechnerisch als mathematisches Mittel aus dem MFR des ersten und des zweiten Homopolypropylens unter Berücksichtigung der jeweiligen Gewichtsanteile ergibt.

11. Spinnvlies nach Anspruch 8 oder 9, **dadurch gekennzeichnet, dass** es Bestandteil eines Laminats ist.

12. Spinnvlies nach Anspruch 8, 9 oder 10, **dadurch gekennzeichnet, dass** es Bestandteil eines atmungsaktiven Laminats mit einem mikroporösen Film ist.

13. Spinnvlies nach einem der Ansprüche 8 bis 12, **dadurch gekennzeichnet, dass** es Bestandteil eines Backsheets eines Hygieneprodukts ist.

14. Spinnvlies nach einem der Ansprüche 8 bis 13, **dadurch gekennzeichnet, dass** es ein Vllesgewicht zwischen 10g/m2 und 15 g/m2 aufweist, gereckt ist und eine Außenlage einer Windel bildet.

15. Spinnvlies nach einem der Ansprüche 8 bis 14, **dadurch gekennzeichnet, dass** das Spinnvlies eine um zumindest 20% höhere Dehnung in CD- und in MD-Richtung aufweist gegenüber einem zweiten Spinnvlies, das im wesentlichen ausschließlich aus dem ersten Homopolypropylen hergestellt ist und ansonsten identisch zum Spinnvlies höherer Dehnung Ist.

16. Verfahren zur Herstellung eines Spinnvileses mit erhöhter Dehnungseigenschaft, wobei eine Polypropylenmischung gemäß einem der Ansprüche 1 bis 8 zur Herstellung eines Spinnvlieses im wesentlichen bestehend daraus eingesetzt wird.

17. Verfahren nach Anspruch 18, **dadurch gekennzeichnet, dass** das erste und das zweite Homopolypropylen jeweils getrennt einer Extrudervorrichtung zugeführt und in der Extrudervorrichtung die Polypropylenmischung daraus hergestellt wird.

18. Verfahren nach Anspruch 16 oder 17, **dadurch gekennzeichnet, dass** das erste und das zweite Homopolypropylen jeweils direkt in den gleichen Extruder zugeführt und dort gemischt werden.

19. Verfahren nach Anspruch 16, 17 oder 18, **dadurch gekennzeichnet, dass** ein EinSchneckenextruder verwendet wird.

20. Verfahren nach einem der Ansprüche 16 bis 19, **dadurch gekennzeichnet, dass** eine Spinnvliesherstellungsvorrichtung bei Nutzung der Polymermischung in zumindest einem Bereich mit einer geringeren Temperatur stabil betrieben wird im Vergleich zu einer Nutzung eines Homopolypropylens, das einen MFR aufweist, der sich rechnerisch als mathematisches Mittel aus dem MFR des ersten und des zweiten Homopolypropylens unter Berücksichtigung der jeweiligen Gewichtsanteile ergibt.

21. Verfahren nach einem der vorhergehenden Ansprüche, **dadurch gekennzeichnet, dass** eine Erhöhung eines Extrusionsdruckes im Spinnpaket erfolgt, wenn ein Anteil des zweiten Homopolypropylens am Polymergemisch erhöht wird.

22. Verfahren nach einem der vorhergehenden Ansprüche, **dadurch gekennzeichnet, dass** bei einem Thermobondierschritt bei zumindest einer beheizten Walze eines Walzenkalanders eine Oberflächentemperatur zwischen 136°C und 143°C eingestellt wird.

**Claims**

1. Use of a polypropylene mixture to produce a spunbond with elevated elongation property, wherein the polypropylene mixture has substantially a first homopolypropylene and a second homopolypropylene, wherein an MFR of the first homopolypropylene is greater than an MFR of the second homopolypropylene, wherein the second homopolypropylene has a weight content in the polypropylene mixture of at least 8 %w/w to 15 %w/w, wherein substantially the first homopolypropylene makes up the remaining weight content of the polypropylene mixture, wherein the second homopolypropylene has an MFR between 2.3 and 5 g / 10 min (230°C/2.16 kg) according to ISO 1133, and a difference of the MFR of the second homopolypropylene from the MRF of the first homopolypropylene is at least 10 g / 10 min, and the first homopolypropylene has an MFR between 22 and 38 g / 10 min, the first homopolypropylene has a mean molecular weight $M_w$ which is between 180,000 and 340,000 g/mol, the second homopolypropylene has a mean molecular weight $M_w$ which is between 300,000 and 500,000 g/mol, and a molecular weight distribution MWD of the second homopolypropylene is between $M_w/M_n = 3.1$ and $M_w/M_n = 4.8$.

2. Use according to claim 1, **characterised in that** the polypropylene mixture is used as the core material or sheath material of a core-sheath fibre.

3. Use according to claim 1 or 2, **characterised in that** only the polypropylene mixture is used to produce a spunbonded fibre.

4. Polypropylene mixture for spunbond production according to one of claims 1 to 3, **characterised in that** the polypropylene mixture has substantially a first homopolypropylene and a second homopolypropylene, wherein an MFR of the first homopolypropylene is greater than an MFR of the second homopolypropylene, wherein the second homopolypropylene has a weight content in the polypropylene mixture of at least 8 %w/w to 15 %w/w, wherein substantially the first homopolypropylene makes up the remaining weight content of the polypropylene mixture, wherein the second homopolypropylene has an MFR between 2.3 and 5 g / 10 min (230°C/2.16 kg) according to ISO 1133, and a difference of the MFR of the second homopolypropylene from the MFR of the first homopolypropylene is at least 10 g / 10 min (230°C/2.16 kg) according to ISO 1133, and the first homopolypropylene has an MFR between 22 and 38 g / 10 min, the first homopolypropylene has a mean molecular weight $M_w$ which is between 180,000 and 340,000 g/mol, the second homopolypropylene has a mean molecular weight $M_w$ which is between 300,000 and 500,000 g/mol, and a molecular weight distribution MWD of the second homopolypropylene is between $M_w/M_n = 3.1$ and $M_w/M_n = 4.8$.

5. Polypropylene mixture according to claim 4, **characterised in that** the first homopolypropylene has been produced with a Ziegler-Natta catalyst whilst the second homopolypropylene has been produced with a metallocene catalyst.

6. Polypropylene mixture according to claim 4, **characterised in that** the first homopolypropylene has been produced with a metallocene catalyst, whilst the second homopolypropylene has been produced with a Ziegler-Natta catalyst.

7. Polypropylene mixture according to one of claims 4 to 6, **characterised in that** a molecular weight distribution MWD of the first homopolypropylene is between $M_w/M_n = 2.3$ and $M_w/M_n = 3.7$.

8. Polypropylene mixture according to claim 4, **characterised in that** the first and the second homopolypropylene are each produced by means of a Ziegler-Natta catalyst.

9. Spunbond with spunbonded fibres consisting, over the entire cross-section or consisting in multicomponent fibres in a range of the cross-section delimited by another component, substantially of a polypropylene mixture according to one of claims 1 to 8.

10. Spunbond according to claim 9, **characterised in that** the elongation properties are greater in CD direction, preferably in CD and in MD direction of the spunbond, compared to a same spunbond using a homopolypropylene instead of the polypropylene mixture, wherein the homopolypropylene has an MFR which is produced by calculation as the mathematical mean from the MFR of the first and the second homopolypropylene, taking into consideration the respective weight contents.

11. Spunbond according to claim 8 or 9, **characterised in that** it is a component of a laminate.

12. Spunbond according to claim 8, 9 or 10, **characterised in that** it is a component of a breathable laminate with a microporous film.

13. Spunbond according to one of claims 8 to 12, **characterised in that** it is a component of a back sheet of a hygiene product.

14. Spunbond according to one of claims 8 to 13, **characterised in that** it has a nonwoven weight between 10 g/m$^2$ and 15 g/m$^2$, is stretched and forms an outer layer of a nappy.

15. Spunbond according to one of claims 8 to 14, **characterised in that** the spunbond has an at least 20% higher elongation in CD and in MD direction compared with a second spunbond which is produced substantially exclusively from the first homopolypropylene and is otherwise identical to the spunbond of higher elongation.

16. Method of producing a spunbond with elevated elongation property, wherein a polypropylene mixture according to one of claims 1 to 8 is used to produce a spunbond substantially consisting thereof.

17. Method according to claim 16, **characterised in that** the first and the second homopolypropylene are each fed separately to an extruder device and in the extruder device the polypropylene mixture is produced therefrom.

18. Method according to claim 16 or 17, **characterised in that** the first and the second homopolypropylene are each fed directly into the same extruder and mixed there.

19. Method according to claim 16, 17 or 18, **characterised in that** a single-screw extruder is used.

20. Method according to one of claims 16 to 19, **characterised in that** a spunbond production device is operated stably using the polymer mixture in at least one range at a lower temperature compared with a use of a homopolypropylene which has an MFR which is produced by calculation as the mathematical mean from the MFR of the first and the second homopolypropylene, taking into consideration the respective weight contents.

21. Method according to one of the preceding claims, **characterised in that** an increase in an extrusion pressure is produced in the spin pack if a content of the second homopolypropylene in the polymer mixture is increased.

22. Method according to one of the preceding claims, **characterised in that** in a thermobonding step, a surface temperature between 136°C and 143°C is set in at least one heated roll of a roller calender.

**Revendications**

1. Utilisation d'un mélange de polypropylènes pour la fabrication d'un tissu non-tissé à propriété d'allongement augmentée, le mélange de polypropylènes comprenant essentiellement un premier homopolypropylène et un second homopolypropylène, un MFR du premier homopolypropylène étant supérieur à un MFR du second homopolypropylène, le second homopolypropylène représentant une proportion en poids du mélange de polypropylènes d'au moins 8 % en poids à 15 % en poids, le premier homopolypropylène constituant essentiellement la proportion en poids restante du mélange de polypropylènes, le second homopolypropylène présentant un MFR compris entre 2,3 et 5 g/10 min (230 °C/2,16 kg) selon ISO 1133, et une différence entre le MFR du second homopolypropylène et le MFR du premier homopolypropylène étant d'au moins 10 g/10 min, et le premier homopolypropylène présentant un MFR compris entre 22 et 38 g/10 min, le premier homopolypropylène présentant une masse molaire moyenne $M_w$ comprise entre 180 000 et 340 000 g/mol, le second homopolypropylène présentant une masse molaire moyenne $M_w$ comprise entre 300 000 et 500 000 g/mol, et une distribution de masses molaires MWD du second homopolypropylène étant comprise entre $M_w/\%M_n = 3{,}1$ et $M_w/M_n = 4{,}8$.

2. Utilisation selon la revendication 1, **caractérisée en ce que** le mélange de polypropylènes est utilisé en tant que matériau de noyau ou matériau d'enveloppe d'une fibre noyau-enveloppe.

3. Utilisation selon la revendication 1 ou 2, **caractérisée en ce que** seul le mélange de polypropylènes est utilisé pour la fabrication d'une fibre de tissu non-tissé.

4. Mélange de polypropylènes pour la fabrication d'un tissu non-tissé selon l'une quelconque des revendications 1 à 3, **caractérisé en ce que** le mélange de polypropylènes comprend essentiellement un premier homopolypropylène et un second homopolypropylène, un MFR du premier homopolypropylène étant supérieur à un MFR du second homopolypropylène, le second homopolypropylène représentant une proportion en poids du mélange de polypropylènes d'au moins 8 % en poids à 15 % en poids, le premier homopolypropylène constituant essentiellement la proportion en poids restante du mélange de polypropylènes, le second homopolypropylène présentant un MFR compris entre 2,3 et 5 g/10 min (230 °C/2,16 kg) selon ISO 1133, et une différence entre le MFR du second homopolypropylène et le MFR du premier homopolypropylène étant d'au moins 10 g/10 min (230 °C/2,16 kg) selon ISO 1133, et le premier homopolypropylène présentant un MFR compris entre 22 et 38 g/10 min, le premier homopolypropylène présentant une masse molaire moyenne $M_w$ comprise entre 180000 et 340 000 g/mol, le second homopolypropylène présentant une masse molaire moyenne $M_w$ comprise entre 300 000 et 500 000 g/mol, et une distribution de masses molaires MWD du second homopolypropylène étant comprise entre $M_w/M_n = 3{,}1$ et $M_w/M_n = 4{,}8$.

5. Mélange de polypropylènes selon la revendication 4, **caractérisé en ce que** le premier homopolypropylène a été fabriqué avec un catalyseur de Ziegler-Natta, tandis que le second homopolypropylène a été fabriqué avec un catalyseur métallocène.

6. Mélange de polypropylènes selon la revendication 4, **caractérisé en ce que** le premier homopolypropylène a été fabriqué avec un catalyseur métallocène, tandis que le second homopolypropylène a été fabriqué avec un catalyseur de Ziegler-Natta.

7. Mélange de polypropylènes selon l'une quelconque des revendications 4 à 6, **caractérisé en ce qu'**une distribution de masses molaires MWD du premier homopolypropylène est comprise entre $M_w/M_n = 2{,}3$ et $M_w/M_n = 3{,}7$.

8. Mélange de polypropylènes selon la revendication 4, **caractérisé en ce que** le premier et le second homopolypropylène sont chacun fabriqués au moyen d'un catalyseur de Ziegler-Natta.

9. Tissu non-tissé comprenant des fibres de tissu non-tissé constituées sur l'ensemble de la section ou constituées en cas de fibres multicomposantes dans une zone de la section délimitée par un autre composant essentiellement d'un mélange de polypropylènes selon l'une quelconque des revendications 1 à 8.

10. Tissu non-tissé selon la revendication 9, **caractérisé en ce que** les propriétés d'allongement dans la direction CD, de préférence dans la direction CD et MD, du tissu non-tissé sont plus grandes en comparaison d'un même tissu non-tissé lors de l'utilisation d'un homopolypropylène au lieu du mélange de polypropylènes, l'homopolypropylène présentant un MFR qui est calculé comme la moyenne mathématique du MFR du premier et du second homopolylpropylène en prenant en compte les proportions en poids respectives.

11. Tissu non-tissé selon la revendication 8 ou 9, **caractérisé en ce qu'**il est un constituant d'un stratifié.

12. Tissu non-tissé selon la revendication 8, 9 ou 10, **caractérisé en ce qu'**il est un constituant d'un stratifié respirant comprenant un film microporeux.

13. Tissu non-tissé selon l'une quelconque des revendications 8 à 12, **caractérisé en ce qu'**il est un constituant d'une feuille arrière d'un produit d'hygiène.

14. Tissu non-tissé selon l'une quelconque des revendications 8 à 13, **caractérisé en ce qu'**il présente un poids de non-tissé compris entre 10 g/m$^2$ et 15 g/m$^2$, en qu'il est étiré et **en ce qu'**il forme une couche extérieure d'une couche.

15. Tissu non-tissé selon l'une quelconque des revendications 8 à 14, **caractérisé en ce que** le tissu non-tissé présente un allongement au moins 20 % supérieur dans la direction CD et MD par rapport à un second tissu non-tissé qui est fabriqué essentiellement exclusivement à partir du premier homopolypropylène et qui est sinon identique au tissu non-tissé d'allongement plus élevé.

16. Procédé de fabrication d'un tissu non-tissé à propriété d'allongement augmentée, dans lequel un mélange de polypropylènes selon l'une quelconque des revendications 1 à 8 est utilisé pour la fabrication d'un tissu non-tissé essentiellement constitué de celui-ci.

17. Procédé selon la revendication 16, **caractérisé en ce que** le premier et le second homopolypropylène sont chacun introduits séparément dans un dispositif d'extrusion et le mélange de polypropylènes est fabriqué à partir de ceux-ci dans le dispositif d'extrusion.

18. Procédé selon la revendication 16 ou 17, **caractérisé en ce que** le premier et le second homopolypropylène sont chacun introduits directement dans la même extrudeuse et y sont mélangés.

19. Procédé selon la revendication 16, 17 ou 18, **caractérisé en ce qu'**une extrudeuse monovis est utilisée.

20. Procédé selon l'une quelconque des revendications 16 à 19, **caractérisé en ce qu'**un dispositif de fabrication de tissus non-tissés est exploité de manière stable dans au moins une zone à une température plus basse lors de l'utilisation du mélange de polymères en comparaison d'une utilisation d'un homopolypropylène présentant un MFR qui est calculé comme la moyenne mathématique du MFR du premier et du second homopolypropylène en prenant en compte les proportions en poids respectives.

21. Procédé selon l'une quelconque des revendications précédentes, **caractérisé en ce qu'**une élévation de la pression d'extrusion dans le bloc de filage a lieu lorsqu'une proportion du second homopolypropylène dans le mélange de polymères est augmentée.

22. Procédé selon l'une quelconque des revendications précédentes, **caractérisé en ce qu'**une température de surface comprise entre 136 °C et 143 °C est ajustée lors d'une étape de thermoliage sur au moins un cylindre chauffé d'une calandre à cylindres.

*FIG. 1.*

*FIG. 2.*

*FIG. 3.*

*FIG. 4.*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0173174 A
- WO 2006067214 A
- WO 2005111282 A
- US 20050165173 A1
- US 20060084342 A
- US 2005182198 A1
- US 2006052022 A1
- EP 0416815 A1
- EP 0420436 A1
- WO 9623010 A
- WO 9830612 A
- US 20010004574 A1
- WO 9616216 A
- US 6207602 B
- US 3692618 A
- US 5032329 A
- WO 03038174 A
- WO 02063087 A
- US 2003124324 A
- US 20030050589 A1
- US 6368444 B
- WO 9955942 A1
- US 6042575 A
- US 4107364 A